(19) Europäisches Patentamt
European Patent Office
Office européen des brevets

(11) EP 0 697 380 B1

(12) # EUROPEAN PATENT SPECIFICATION

(45) Date of publication and mention of the grant of the patent:
**05.12.2001 Bulletin 2001/49**

(51) Int Cl.[7]: **C04B 7/42**

(21) Application number: **95202166.5**

(22) Date of filing: **09.08.1995**

(54) **Chromate free cements and a process for preparing them**

Chromatfreie Zemente und Verfahren zu deren Herstellung

Ciments sans chromate et procédé pour leur préparation

(84) Designated Contracting States:
**BE CH DE DK ES FR GB GR IT LI**

(30) Priority: **19.08.1994 IT MI941756**

(43) Date of publication of application:
**21.02.1996 Bulletin 1996/08**

(73) Proprietor: **ITALCEMENTI S.p.A.**
**24100 Bergamo (IT)**

(72) Inventors:
- **Cassar, Luigi**
  **I-20097 San Donato Milanese (Milan) (IT)**
- **Castaldi, Graziano**
  **I-28072 Briona (Novara) (IT)**
- **Corazza, Fabio**
  **I-24100 Bergamo (IT)**

(74) Representative: **De Gregori, Antonella et al**
**Ing. Barzano & Zanardo Milano S.p.A.**
**Via Borgonuovo 10**
**20121 Milano (IT)**

(56) References cited:

| | |
|---|---|
| **EP-A- 0 160 747** | **EP-A- 0 324 465** |
| **CH-A- 534 643** | **DD-A- 246 983** |
| **DD-A- 262 852** | **US-A- 4 161 409** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a process for preparing a cement composition which, when, at use time, is brought into contact with water, releases less than 2 parts per million parts of soluble hexavalent chrome (chromates).

A further object of the present invention is the cement that said process makes it possible to obtain.

It is known that nearly all of the hydraulic binders contain chrome, prevailingly as hexavalent status.

In particular, it is well-known that when cement is mixed with water, soluble hexavalent chrome contained in it is dissolved.

After a long exposure time to aqueous solutions of chrome-(VI) compounds, an eczema can develop (in general on workers' hands and arms) which can even become of chronic character.

Although a lower limit cannot be established under which one will be sure that the causes of chrome induced eczema are removed, some, by now established, practical experiences would indicate that noxious chrome concentrations in cements would be higher than 1-2 μg of chromate/cement g (1-2 ppm).

In the past, attempts to solve the problem had made resort to suitable additions of ferrous sulfate during cement preparation before or after clinker grinding.

In fact, following $Fe^{2+}$ addition, hexavalent chrome [chrome-(VI) or $Cr^{6+}$] is reduced to Cr-(III) (trivalent chrome, or $Cr^{3+}$) according to the generic equation:

$$Cr^{6+} + 3\,Fe^{2+} \rightarrow Cr^{3+} + 3\,Fe^{3+}$$

Such a reaction takes place in aqueous solution and, consequently, at cement use time.

Water in the mix dissolves hexavalent chrome which is immediately transformed into insoluble, nontoxic trivalent chrome. See, e.g., Italian patent No. 944,160.

In reality, a very large number of problems exist which make this reaction unfeasible from a practical point of view.

A great drawback arising when this reductant is used is that reducing power of ferrous sulfate decreases with time because $Fe^{2+}$ undergoes a slow oxidation in air. Therefore, during the usual time periods of cement storage inside silos or bags, the reducing power of $Fe^{2+}$ tends to decrease, thus no longer securing that at use time chromate will be reduced to $Cr^{3+}$.

In European patent No. 54 314 a method for chromate reduction is disclosed, in which during cement production process an amount of from 0.3 to 1% is added of a special type of ferrous sulfate hydrate, which is characterized by a suitable coating aiming at preventing $Fe^{2+}$ ion from being oxidised.

However, the use of this type of ferrous sulfate enables the reducing power of iron to be preserved only partially.

However, a further technical drawback exists, in correlation with the preservation of ferrous sulfate hydrate in cement: this product tends to block inside the silos and therefore does not homogeneously distribute throughout cement.

European patent No. 160,747 also discloses a method of cement production in which ferrous sulphate is added in a dry, or non-dissolved, state.

In order to address this problem, European patent No. 125,267 proposes a method according to which ferrous sulfate is dried and mixed with products displaying suitable granulometry characteristics, such as flying ash or calcium sulfate, which the resulting mixture being subsequently added to cement.

Also this method, besides being particularly laborious when carried out on an industrial scale, does not anyway prevent iron from undergoing the undesired valency state change and furthermore requires that substances are added which may be undesired.

A further problem, also not completely removable, derives from ferrous sulfate, per se, being a corrosive agent, undesired in both clinker grinding facilities and silos.

Therefore, the need for solving the problem of chromate reducing in cements, while simultaneously removing all drawbacks caused by the use of ferrous sulfate, is strongly felt.

The removal of chrome is accomplished according to the present invention by means of the action of a suitably selected organic reductant compound, directly metered to cement during the grinding and production process.

Therefore, the object of the present invention is a process for preparing a cement composition which comprises bringing into contact (before, during or after the grinding step) the component materials of such a composition, or the same composition, with an organic reductant in the presence of water in order to reduce the level of soluble chromates present in the produced cement to a content of around 2 μg of chromate per cement gram (2 ppm), said organic reductant being characterized in that it is selected from:

-- an aldehyde of formula (I)

$$R\text{-}CHO \quad (I)$$

wherein R can be hydrogen, CHO, COOH, $COOR_1$ or a $C_1$-$C_8$ alkyl radical possibly substituted with one or two OH group(s) or a CHO, COOH, $COOR_1$ group wherein $R_1$ is a $C_1$-$C_4$ alkyl radical,

-- a corresponding hydrate, semi-acetalic or acetalic derivative of formula (II)

$$R\text{-}CH(OR_2)(OR_3) \quad (II)$$

wherein $R_2$ and $R_3$ can be hydrogen or a $C_1$-$C_3$ alkyl radical, or $R_2$ and $R_3$, linked to each other, represent the $(CH_2)_n$ moiety with n being either 2 or 3,

-- and a corresponding cyclic, trimeric derivative of formula (III)

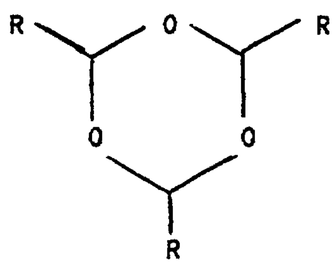

in which R has the same meaning as indicated hereinabove.

A further object of the present invention is the cement prepared by means of said process.

Therefore, the aldehydic compounds as disclosed above, and their corresponding hydrate, semi-acetalic, acetalic derivatives, cyclic trimers, in whichever form they may be present, such as, e.g., the oligomeric form, as well as the alkali- or alkali-earth metal salts of acidic or alcoholic functions possibly present in the structure, have to be regarded as being organic reductants according to the present invention.

In particular, the following compounds are specific examples of the above mentioned reductants:

$$HOCH_2\text{-}CHO$$

hydroxy acetaldehyde

$$OHC\text{-}CHO$$

glyoxal

$$H\text{-}CHO$$

formaldehyde

$$CH_3\text{-}CHO$$

acetaldehyde

$$CH_3\text{-}CH_2\text{-}CHO$$

propionaldehyde

$HOOC-CHO$

glyoxalic acid

$CH_3-OOC-CHO$

glyoxalic acid methyl ester

$OHC-(CH_2)_2-CHO$

succinic di-aldehyde

$OHC-(CH_2)_2-CHO$

1,8-octanedial

$HOOC-CH(OH)_2$

glyoxalic acid hydrate

$(C_2H_5O)(OH)CH-COOC_2H_5$

glyoxalic acid ethyl ester ethyl semiacetal

$(CH_3O)_2-(CH_2)_6-CH(OCH_3)_2$

1,1,8,8-tetramethoxy octane

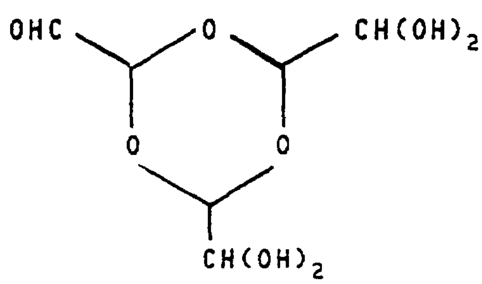

glyoxal trimer dihydrate

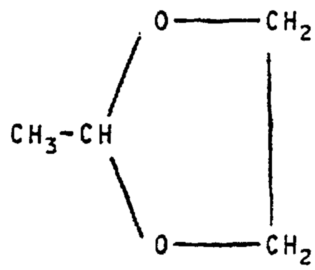

According to a preferred aspect of the present organic, glyoxal trimer dihydrate proved to be the organic reductant.

Other particularly preferred reactants are formaldehyde, acetaldehyde, para-formaldehyde, glyceraldehyde, glycolic aldehyde.

It should be stated in detail here that the expressions "chrome free" and "eliminate or substantially reduce the level of water soluble chromates", as used in the instant text and in the appended claims, are understood to mean that the content of soluble chrome contained in the produced cement is of round 2 µg of chromate per cement gramme (2 ppm), as determined according to SP0662 method published by the Swedish National Testing and Research Institute on Dec. 7th, 1992.

Chromates contained in cement mostly derive from those materials from which cement is formed.

In the instant specification, the expression "those materials from which cement is formed" relates to those raw materials from which cement is produced. As well-known, cement is produced by grinding clinker and calcium sulfate, possibly in the presence of further added materials, such as blast furnace slags, (either natural or industrial) pozzuolanas, (either silica or calcium) flying ashes, fired shales, limestone or microsilica as the starting materials.

The organic agent can reduce chromates during any steps of cement production process, i.e., before, during or after clinker grinding with calcium sulfate, provided that the operating reduction conditions so allow.

This means that the process according to the invention can be applied by using clinker or same cement as the starting material.

The temperature is generally comprised within the range of from 60 to 120°C. These operating conditions are sufficient in order to eliminate or substantially reduce soluble chromates with reductant amounts comprised within the range of from 0.01% to 1% by weight, based on cement, preferably of from 0.04% to 0.1%.

Water presence is necessary in order that the reaction of reduction of chromates with the aldehydic derivatives of the invention may occur. The Level of water into contact with clinker or cement should desirably be decreased as far as possible. Water level should preferably be not higher that 2% based on cement. Water should not necessarily be added; water contained in the moisture of the starting material may be already enough; however, should water be added, it can be added either as atomized water, or as steam.

Obviously, the optimal amount of reductant depends on a number of factors, such as the amount of chrome to be reduced, contained in the starting material or from other sources, the type of organic reductant selected, water amount and temperature at which the reaction is carried out.

However, those skilled in the art will be perfectly capable of evaluating from time to time which the most suitable operating conditions should be.

It may be suggested here that for a clinker with a content of about 10 ppm of hexavalent chrome to be reduced in the presence of steam at 100°C, approximately 0.1% by weight of reductant of the invention having an aldehydic function will be necessary. The organic reducing reactant according to the present invention is perfectly compatible with any known additives as commonly used for cement, i.e., both the grinding additives, such as, e.g., triethanolamine or that amine blend known as NT9(R), or other types of additives, such as, e.g., accelerants, as $CaCl_2$.

However, the ideal operating conditions will be found during clinker grinding, because the grinding facilities (of ball or roller type) generate temperatures of round 100-120°C. The operating temperature is kept at those values by means of the addition of water, the function of which is of keeping inside the grinding chambers, moisture levels of at least 0.3 kg of steam per kg of air.

A preferred mode for implementing the invention provides for the organic reductant to be added to water fed to the chambers during the grinding step.

The presence of small amounts of transition metal ions can favour the process of the invention.

In the instant specification, the expressions "cement" and "cement composition" encompass any cement types, i.e., both so-said "normal" cements provided for by the preliminary European standard 197.1 (Cements of I, II, III, IV and V Types), i.e., normal Portland cement and any mix cements (pozzuolana cement, composite cement or slag cement), and such cements as aluminous cement or special cements, e.g., low-hydration heat cements.

The present invention offers the extraordinary advantage of producing cement which is already substantially

free from chrome before being stored to silos, or packaged inside bags.

This feature, together with the elimination of all of the disadvantages deriving from the use of ferrous sulfate, represent a valuable solution to the technical problem of chrome removal.

The organic reductants according to the present invention do not endanger the chemical and physical-mechanical properties of cement mixes.

For that purpose, comparison tests were carried out on samples with and without the reductant additive, for compression strength in normal mortar.

The results from these tests confirmed that the 28-day strength values were substantially the same in both cases.

The organic reductants according to the present invention display a high reaction rate, have a Limited cost, and, should they remain inside the cement composition, either as such or as oxidized products, they will not constitute any risk causes (e.g., pollution, toxicity risks, and so forth).

The method used for determining the content of $Cr^{6+}$ in the cements of the present invention is derived from a standard published by the Swedish National Testing and Research Institute.

Said method consists in an extraction carried out with water or an aqueous solution of sodium sulfate, with stirring. Cement:water ratio is 1:10 and extraction time is 15 minutes.

After filtration, the content of $Cr^{6+}$ was determined on the filtrate, by means of the colorimetric methods using diphenyl carbazide.

In the following, some examples are reported in order to better explain the invention without Limiting it.

Example 1

Five kg of clinker was heated up to about 90°C and was ground in a refiner mill, with temperature being kept around 90°C.

Then, 25 ml was added of a suspension of glyoxal trimer dihydrate (5 g) and 20 ml of grinding additive (NT9$^{(R)}$).

Grinding was continued until a fineness of about 3,500 Blaine was reached (required time, about 2 hours).

The mixture was discharged, admixed with sodium sulfate (5%) and then was analysed without being submitted to any further treatments.

Thus produced cement (5 g) was suspended in 100 ml of a solution of 20% $Na_2SO_4$, with stirring for 15 minutes at room temperature, and then was filtered and diluted.

Then, 1 ml of 1% diphenyl carbazide solution was added and, after the development of the brown-violet colour, the absorbance at 540 nm was measured by means of a colorimeter. The concentration of chromates in the sample resulted to be lower than 1 ppm.

The concentration of chromates in a sample of said clinker ground without the addition of the reducing additive under such conditions as reported above, resulted to be of 10 ppm.

Example 2

The cement prepared according to Example 1 was characterized by means of the standard test in normal mortar according to EU standard UNI EN 196.1.

The results are reported in following Table 1. For comparison purpose, also the values are reported which relate to a cement prepared without the reducing additive, but exclusively using the grinding additive NT9$^{(R)}$.

**Table 1**

| | Blaine Specific Surface ($cm^2/g$) | Water in the mix, (%) | Spreading, (cm) | Setting | | Expansion (mm) | Compression strength, ($kg/cm^2$) | |
|---|---|---|---|---|---|---|---|---|
| | | | | Initial | End | | 3 days | 28 dd. |
| Grinding with additive | 3,452 | 22.4 | 133 | 2.38 | 4.53 | 0 | 300 | 450 |
| Standard grinding | 3,530 | 24.8 | 120 | 1.33 | 2.10 | 0 | 314 | 450 |

From the table, one will easily see that the compression values at 28 days are the same.

Example 3

A clinker containing 20 ppm of chromates was ground by operating substantially as disclosed in Example 1:

(a) in the presence of 0.4% ferrous sulfate;
(b) in the presence of 0.4% of glyoxal trimer dihydrate.

The end amount of hexavalent chrome resulted to be 10 ppm in (a) case; and 1.6 ppm in (b) case.

Example 4

By substantially following the same procedure as disclosed in Example 1, but using different reducing agents by starting from a clinker which contained 8 ppm of chromates, the following results were obtained:

| Organic reactant | Content of chromates in clinker after the treatment (ppm) |
|---|---|
| Formaldehyde | 1.8 |
| Para-formaldehyde | 1.0 |
| Acetaldehyde | 1.5 |
| Glyceraldehyde | 0.2 |
| Glycolic aldehyde | 0.4 |

## Claims

1. Process for preparing a cement composition which comprises bringing into contact the component materials of such a composition, or the same composition, with an organic reductant in the presence of water in order to reduce the level of soluble chromates present in the produced cement to a content of around 2 μg of chromate per cement gram (2 ppm), said organic reductant being **characterized in that** it is selected from:

-- an aldheyde of formula (I)

$$R\text{-}CHO \qquad (I)$$

wherein R can be hydrogen, CHO, COOH, $COOR_1$ or a $C_1$-$C_8$ alkyl radical possibly substituted with one or two OH group(s) or a CHO, COOH, $COOR_1$ group wherein $R_1$ is a $C_1$-$C_4$ alkyl radical,

-- a corresponding hydrate, semi-acetalic or acetalic derivative of formula (II)

$$R\text{-}CH(OR_2)(OR_3) \qquad (II)$$

wherein $R_2$ and $R_3$ can be hydrogen or a $C_1$-$C_3$ alkyl radical, or $R_2$ and $R_3$, linked to each other, represent the $(CH_2)_n$ moiety with n being either 2 or 3,

-- and a corresponding cyclic, trimeric derivative of formula (III)

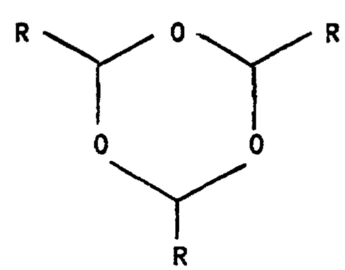

in which R has the same meaning as indicated hereinabove.

**2.** Process according to claim 1, in which the aldehydic compounds of formula (I) or (II) are in oligomeric form.

**3.** Process according to claims 1 and 2, in which the acidic or alcoholic functions are in the form of alkali or alkali-earth metal salts.

**4.** Process according to claim 1, in which the organic reductant is selected from glyoxal, its trimer dihydrate, formaldehyde, paraformaldehyde, acetaldehyde, glyceraldehyde and glycolic aldehyde.

**5.** Process according to claims from 1 to 4, further **characterized in that** the reaction temperature is comprised within the range of from 60 to 120°C.

**6.** Process according to claims from 1 to 5, **characterized in that** the organic reductant of formula (I), (II) or (III) is present at a level comprised within the range of from 0.01% to 1% by weight, based on cement.

**7.** Process according to claims from 1 to 6, in which the organic reductant of formula (I), (II) or (III) is present at a level comprised within the range of from 0.04% to 0.1% by weight, based on cement.

**8.** Process according to claims from 1 to 7, in which the water content is lower than 2%, based on cement.

**9.** Process according to claims from 4 to 8, **characterized in that** the organic reductant of formula (I), (II) or (III) is added during clinker grinding.

**10.** Process according to claim 9, **characterized in that** the organic reductant of formula (I), (II) or (III) is added together with a grinding additive, preferably triethanolamine or NT9(R).

**11.** Process according to claims from 4 to 9, **characterized in that** the cement composition is selected from so-said "normal" cements as provided for by preliminary European standard 197.1, (cements of I, II, III, IV and V types), such cements as aluminous cement or special cements.

**12.** Chromate free cement composition, **characterized in that** it is produced by means of the process according to claims from 1 to 11.

**13.** Use of organic reductant selected from compounds of formula (I), (II) or (III) as claimed in claim 1, in order to reduce soluble chromate levels in clinker or cement compositions to a content of around 2 µg of chromate per cement gram (2 ppm).

**Patentansprüche**

**1.** Verfahren zur Herstellung einer Zementzusammensetzung, bei dem die Komponentenmaterialien solch einer Zusammensetzung oder die Zusammensetzung selbst mit einem organischen Reduktionsmittel in Gegenwart von Wasser in Kontakt gebracht wird, um das Niveau der löslichen Chromate, die in dem hergestellten Zement vorliegen, auf einen Gehalt von rund 2 µg Chromat pro Gramm Zement (2 ppm) zu erniedrigen, wobei das organische Reduktionsmittel **dadurch gekennzeichnet ist, daß** es ausgewählt ist aus:

**--** einem Aldehyd der Formel I

$$R\text{-}CHO \qquad (I)$$

in der R Wasserstoff, CHO, COOH, $COOR_1$ oder ein $C_1$-$C_8$ Alkylrest sein kann, gegebenenfalls substituiert mit einer oder zwei OH-Gruppen oder einer CHO-, COOH-, $COOR_1$-Gruppe, in der $R_1$ ein $C_1$-$C_4$ Alkylrest ist,

**--** einem entsprechenden Hydrat, Halbacetal- oder Acetalderivat der Formel (II)

R-CH($OR_2$)($OR_3$) (II),

in der $R_2$ und $R_3$ Wasserstoff oder ein $C_1$-$C_3$ Alkylrest sein können oder $R_2$ und $R_3$, wenn sie miteinander verbunden sind, den $(CH_2)_n$ Rest bedeuten, worin n entweder 2 oder 3 ist,

-- und einem entsprechenden zyklischen, trimeren Derivat der Formel (III)

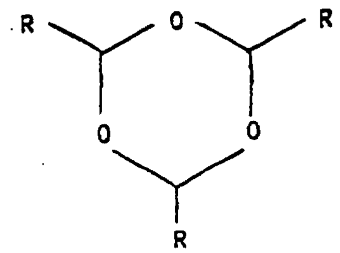

(III),

in der R dieselbe Bedeutung hat, wie oben angegeben.

**2.** Verfahren nach Anspruch 1, bei dem die Aldehydverbindungen der Formeln (I) oder (II) in oligomerer Form vorliegen.

**3.** Verfahren nach Anspruch 1 und 2, bei dem die sauren oder alkoholischen Funktionen in Form von Alkali- oder Erdalkalimetallsalzen vorliegen.

**4.** Verfahren nach Anspruch 1, bei dem das organische Reduktionsmittel ausgewählt ist aus Glyoxal, seinem trimeren Dihydrat, Formaldehyl, Paraformaldehyd, Acetaldehyd, Glycerinaldehyd und Glykolaldehyd.

**5.** Verfahren nach einem der Ansprüche 1 bis 4 weiterhin **dadurch gekennzeichnet, daß** die Reaktionstemperatur innerhalb des Bereichs von 60 bis 120°C liegt.

**6.** Verfahren nach einem der Ansprüche 1 bis 5, **dadurch gekennzeichnet, daß** das organische Reduktionsmittel der Formeln (I), (II) oder (III) in einer Menge im Bereich von 0,01 Gew.-% bis 1 Gew.-%, bezogen auf den Zement, vorliegt.

**7.** Verfahren nach einem der Ansprüche 1 bis 6, bei dem das organische Reduktionsmittel der Formeln (I), (II) oder (III) in einer Menge im Bereich von 0,04 Gew.-% bis 0,1 Gew.-%, bezogen auf den Zement, vorliegt.

**8.** Verfahren nach einem der Ansprüche 1 bis 7, bei dem der Wassergehalt niedriger als 2 % ist, bezogen auf den Zement.

**9.** Verfahren nach einem der Ansprüche 4 bis 8, **dadurch gekennzeichnet, daß** das organische Reduktionsmittel der Formeln (I), (II) oder (III) während des Vermahlens des Klinkers zugegeben wird.

**10.** Verfahren nach Anspruch 9, **dadurch gekennzeichnet, daß** das organische Reduktionsmittel der Formeln (I), (II) oder (III) zusammen mit einem Mahladditiv, vorzugsweise Triethanolamin oder NT9(R), zugegeben wird.

**11.** Verfahren nach einem der Ansprüche 4 bis 9, **dadurch gekennzeichnet, daß** die Zementzusammensetzung ausgewählt ist aus sogenannten "normalen" Zementen, wie sie durch die vorbereitende europäische Norm 197.1 vocgesehen sind, (Zementen der Typen I, II, III, IV und V), solchen Zementen wie Tonerdezement oder Spezialzementen.

**12.** Chromatfreie Zementzusammensetzung, **dadurch gekennzeichnet, daß** sie mittels des Verfahrens eines der Ansprüche 1 bis 11 hergestellt ist.

**13.** Verwendung eines organischen Reduktionsmittels, ausgewählt aus den Verbindungen der Formeln (I), (II) oder

(III), wie in Anspruch 1 beansprucht, um Niveaus von löslichem Chromat in Klinker- oder Zementzusammensetzungen auf einen Gehalt von rund 2 µg Chromat pro Gramm Zement (2 ppm) zu erniedrigen.

## Revendications

**1.** Procédé de préparation d'une composition de ciment, qui comprend le fait de mettre en contact les matériaux composants de la composition, ou cette même composition, avec un réducteur organique en présence d'eau, afin de réduire le taux de chromates solubles présents dans le ciment produit à une teneur d'environ 2 µg de chromate par gramme de ciment (2 ppm), ledit réducteur organique étant **caractérisé par le fait qu'**il est choisi parmi les éléments suivants :

- un aldéhyde de formule (I),

$$R\text{-}CHO \qquad (I)$$

  dans laquelle R représente un atome d'hydrogène, CHO, COOH, $COOR_1$ ou un groupe alkyle en $C_1$-$C_8$ éventuellement substitué par un ou deux groupes OH ou par un groupe CHO, COOH, $COOR_1$, où $R_1$ est un groupe alkyle en $C_1$-$C_4$,
- un dérivé hydrate, acétal ou semi-acétal de formule (II)

$$R\text{-}CH(OR_2)(OR_3) \qquad (II)$$

  dans laquelle $R_2$ et $R_3$ représentent un atome d'hydrogène ou un groupe alkyle en $C_1$-$C_3$, ou bien $R_2$ et $R_3$, liés entre eux, représentent le fragment $(CH_2)_n$, dans lequel n vaut 2 ou 3,
- et un dérivé trimère cyclique correspondant, de formule (III)

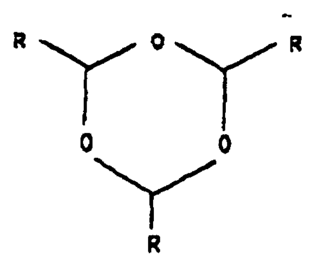

  dans laquelle R a la même signification que celle indiquée ci-dessus.

**2.** Procédé selon la revendication 1, dans lequel les composés aldéhyde de formule (I) ou (II) sont sous forme d'oligomères.

**3.** Procédé selon les revendications 1 et 2, dans lequel les fonctions acide ou alcool sont sous la forme de sels de métaux alcalins ou alcalino-terreux.

**4.** Procédé selon la revendication 1, dans lequel le réducteur organique est choisi parmi le glyoxal, son trimère dihydraté, le formaldéhyde, le paraformaldéhyde, l'acétaldéhyde, le glycéraldéhyde et l'aldéhyde glycolique

**5.** Procédé selon l'une quelconque des revendications 1 à 4, **caractérisé en outre par le fait que** la température de la réaction est comprise dans la gamme de 60 à 120°C.

**6.** Procédé selon l'une quelconque des revendications 1 à 5, **caractérisé par le fait que** le réducteur organique de formule (I), (II) ou (III) est présent dans une proportion comprise dans la gamme de 0,01 % à 1 % en poids, par rapport au ciment.

**7.** Procédé selon l'une quelconque des revendications 1 à 6, dans lequel le réducteur organique de formule (I), (II) ou (III) est présent dans une proportion comprise dans la gamme de 0,04 % à 0,1 % en poids, par rapport au ciment.

**8.** Procédé selon l'une quelconque des revendications 1 à 7, dans lequel la teneur en eau est inférieure à 2 %, par rapport au ciment.

**9.** Procédé selon l'une quelconque des revendications 4 à 8, **caractérisé par le fait que** le réducteur organique de formule (I), (II) ou (III) est ajouté pendant le broyage du clinker.

**10.** Procédé selon la revendication 9, **caractérisé par le fait que** le réducteur organique de formule (I), (II) ou (III) est ajouté conjointement avec un additif de broyage, de préférence la triéthanolamine ou NT9®.

**11.** Procédé selon l'une quelconque des revendications 4 à 9, **caractérisé par le fait que** la composition de ciment est choisie parmi ce qu'on appelle les ciments « normaux », tels que définis par la norme européenne préliminaire 197.1 (ciments de type I, II, III, IV ou V), tels que le ciment alumineux ou des ciments spéciaux.

**12.** Composition de ciment exempt de chromate, **caractérisée par le fait qu'**elle est préparée suivant le procédé revendiqué dans les revendications 1 à 11.

**13.** Utilisation d'un réducteur organique choisi parmi les composés de formule (I), (II) ou (III) selon la revendication 1, pour réduire le taux de chromates solubles dans les compositions de clinker ou de ciment à une teneur d'environ 2 µg de chromate par gramme de ciment (2 ppm).